# EUROPEAN PATENT APPLICATION

(11) **EP 3 528 178 A1**
(43) Date of publication of application: **21.08.2019**
(21) Application number: 18156676.1
(22) Date of filing: 14.02.2018
(51) Int. Cl.: G06N 3/04, G06N 3/08

(54) **METHOD FOR ADAPTING A FUNCTIONAL DESCRIPTION FOR A VEHICLE'S COMPONENT TO BE OBSERVED, COMPUTER PROGRAM AND COMPUTER READABLE MEDIUM**

(71) Applicant: Siemens Aktiengesellschaft, 80333 München (DE)
(72) Inventor: Sivalingam, Udhayaraj, 81379 München (DE); Taylor, Michael, 81929 München (DE)

(57) **Abstract**

The invention relates to a method for adapting a functional description (4) for a vehicle's component to be observed.

A method for adapting a functional description (4) for a vehicle's component to be observed with enhanced accuracy may be achieved by means of the steps of
- training a functional description (4) using continuous data (12) as well as asynchronous data (14) by means of a phased Long Short-Term Memory algorithm, wherein both types of data (12, 14) describe functional behaviour of reference components of reference vehicles, and
- post-training of the trained functional description (4) using data (18) describing the functional behaviour of the vehicle's component to be observed by means of Transfer Learning, wherein the post-training results in the adapted functional description (20, 24, 40).

## Description

The invention relates to a method for adapting a functional description of a vehicle's component to be observed.

Determining a functional status of e.g. a railway's component is very difficult. Particularly, it is very difficult to find a functional description for predicting the functional status of the railway's component in a correct way. Most functional descriptions have low accuracy and give high numbers of false alarms.

Low accuracy may - at least partially - result from the fact that railways produce continuous data as well as asynchronous data. The asynchronous data are sampled asynchronously to the continuous data. Hence, the asynchronous data differ from the continuous data in the number of values per time unit. Therefore, both data differ in the sample rate. Most of the known prediction methods have problems in considering the different sample rates of the data.

Moreover, low accuracy may result from the fact that training of a functional description using many data describing functional behaviour of many components of many vehicles results in a trained functional description being specific for the respective components, but not specific for a different component to be observed.

One objective of the invention is to provide a method for adapting a functional description for a vehicle's component to be observed with enhanced accuracy.

This objective is accomplished by means of a method according to claim 1.

The method for adapting a functional description for a vehicle's component to be observed, according to the invention, comprises the step of training a functional description using continuous data as well as asynchronous data by means of a phased Long Short-Term Memory algorithm, wherein both types of data describe functional behaviour of reference components of reference vehicles. Moreover, the method comprises the step of post-training of the trained functional description using data describing the functional behaviour of the vehicle's component to be observed by means of Transfer Learning, wherein the post-training results in the adapted functional description.

The invention is based on the finding that training needs a huge database. By means of phased LSTM, both types of data, continuous data as well as asynchronous data, can be used. Hence, the training will be more effective.

However, the training of the functional description with many data describing functional behaviour of many components of many vehicles results in a trained functional description being not specific for a component to be observed.

By combining phased LSTM with Transfer Learning, an enhanced functional description may be achieved. Particularly, by means of Transfer Learning, the knowledge gained in the training of the functional description is used. The post-training of the trained functional description using data describing the functional behaviour of the vehicle's component to be observed results in an adapted functional description, which may be very specific for the component to be observed.

By means of a phased Long Short-Term Memory (phased LSTM) algorithm, data with different sample rates can be considered. Hence, by means of a phased LSTM algorithm, continuous data as well as asynchronous data can be considered.

Advantageously, the continuous data is equally spaced in time. Accordingly, the continuous data may be regularly sampled. The continuous data may comprise continuous time-dependent sensor data. For instance, the continuous data may comprise synchronous data from different sensors.

Preferentially, the asynchronous data differ from the continuous data in the number of values per time unit. Accordingly, the asynchronous data may have a different sample rate than the continuous data. For example, the asynchronous data may comprise discrete values. Therefore, the asynchronous data may be irregularly sampled. For instance, the asynchronous data may comprise irregularly sampled time-dependent driving-related diagnostic data.

Preferably, the data describing the functional behaviour of the vehicle's component to be observed comprise continuous data. Particularly, the data describing the functional behaviour of the vehicle's component to be observed may comprise continuous time-dependent sensor data.

A vehicle's component to be observed in the meaning of this invention may be a component to be observed of a vehicle to be observed.

Further, it is advantageous that the data describing the functional behaviour of the vehicle's component to be observed comprise asynchronous data. Particularly, the data describing the functional behaviour of the vehicle's component to be observed may comprise irregularly sampled time-dependent diagnostic data.

It is preferred that, in the step of training, representations are determined. The representations may represent features being similar in the behaviour of every reference component. Hence, the representations may comprise information regarding a general behaviour of the data describing the functional behaviour of the reference components of the reference vehicles. The reference components of the reference vehicles are shortly called reference components.

Advantageously, in the step of post-training, the representations are kept. Hence, by means of Transfer Learning, the representations are kept. In this way, the representations may be transferred from the domain of the reference components of the reference vehicles to the domain of the vehicle's component to be observed. Particularly, the representations may be adapted to the domain of the vehicle's component to be observed. In this way, the domain may be adapted, which can be called Domain Adaption.

The "domain of the reference components of the reference vehicles" can be the source domain in the meaning of machine learning. Further, the "domain of the vehicle's component to be observed" can be the target domain in the meaning of machine learning.

Expediently, the trained functional description has an architecture comprising an input layer, several hidden layers and an output layer.

For the step of post-training, the main architecture of the trained functional description may be transferred, particularly to the domain of functional behaviour of the vehicle's component to be observed.

The main architecture in the meaning of the invention may comprise the at least the main components of the architecture named above.

The transferred main architecture may also comprise neurons, which may build a neural network. Moreover, the transferred main architecture may also comprise weights of the neurons. Further, it is advantageous that, in the step of post-training, the architecture with its layers is kept.

Preferably, in the step of post-training, at least one or several last hidden layer(s) is/are adapted to the data describing the functional behaviour of the vehicle's component to be observed. Hence, only the last one hidden layer may be adapted to the data describing the functional behaviour of the vehicle's component to be observed. Optionally, only the last several hidden layers may be adapted to the data describing the functional behaviour of the vehicle's component to be observed. Moreover, all hidden layers can be adapted to the data describing the functional behaviour of the vehicle's component to be observed.

For adapting at least the one or several last hidden layer(s) in the step of post-training, the respective hidden layer(s) is/are freed and the data describing the functional behaviour of the vehicle's component to be observed are inputted to the input layer.

Expediently, each hidden layer comprises neurons. The neurons may build a neuronal network. Moreover, it is advantageous that each neuron comprises a weight.

For adapting at least the one or several last hidden layer(s) in the step of post-training, the weights of neurons within the respective hidden layer(s) may be re-calculated. It is advantageous that the weights of neurons within the respective hidden layer(s) may be re-calculated starting with initial weights from the trained functional description.

It is advantageous that a number of neurons within each hidden layer is kept in the step of post-training. Hence, the number of neurons of each hidden layer may remain unchanged in the step of post-training.

In a preferred embodiment of the invention, the vehicle's component to be observed is a railway component. Hence, the method described above may be used for observing a railway component.

Further, the invention relates to a usage of the method described above to determine a functional status of the component to be observed by means of the adapted functional description.

Additionally, the invention relates to a computer program with code, which program, when executed on a computer, realises the method according to the invention and/or according to the embodiments thereof.

Moreover, the invention relates to a computer readable medium having a computer program for execution on a computer, which computer program, when executed on a computer, causes the computer to perform the method according to the invention and/or according to the embodiments thereof.

Even if terms are used in the singular or in a specific numeral form, the scope of the invention should not be restricted to the singular or the specific numeral form.

The previously given description of advantageous embodiments of the invention contains numerous features which are partially combined with one another in the dependent claims. Expediently, these features can also be considered individually and be combined with one another into further suitable combinations. More particularly, these features may be combined with the computer program, the computer readable medium and the method according to the respective independent claim individually as well as in any suitable combination. Furthermore, features of the method, formulated as apparatus features, may be considered as features of the computer program and/or of the computer readable medium and, accordingly, features of the computer program and/or of the computer readable medium, formulated as process features, may be considered as features of the method.

The above described characteristics, features and advantages of the invention and the manner in which they are achieved can be understood more clearly in connection with the following description of exemplary embodiments which will be explained with reference to the drawings. The exemplary embodiments are intended to illustrate the invention, but are not supposed to restrict the scope of the invention to combinations of features given therein, neither with regard to functional features. Furthermore, suitable features of each of the exemplary embodiments can also be explicitly considered in isolation, be removed from one of the exemplary embodiments, be introduced into another of the exemplary embodiments and/or be combined with any of the appended claims.

In the drawings display:
- FIG 1: a schematic overview of the training of a functional description for a vehicle's component to be observed;
- FIG 2: a schematic overview of a post-training of the trained functional description after the training shown in FIG 1;
- FIG 3: a schematic overview of another post-training of the trained functional description after the training shown in FIG 1; and
- FIG 4: a schematic overview of a different post-training, wherein the main architecture of the trained functional description is transferred.

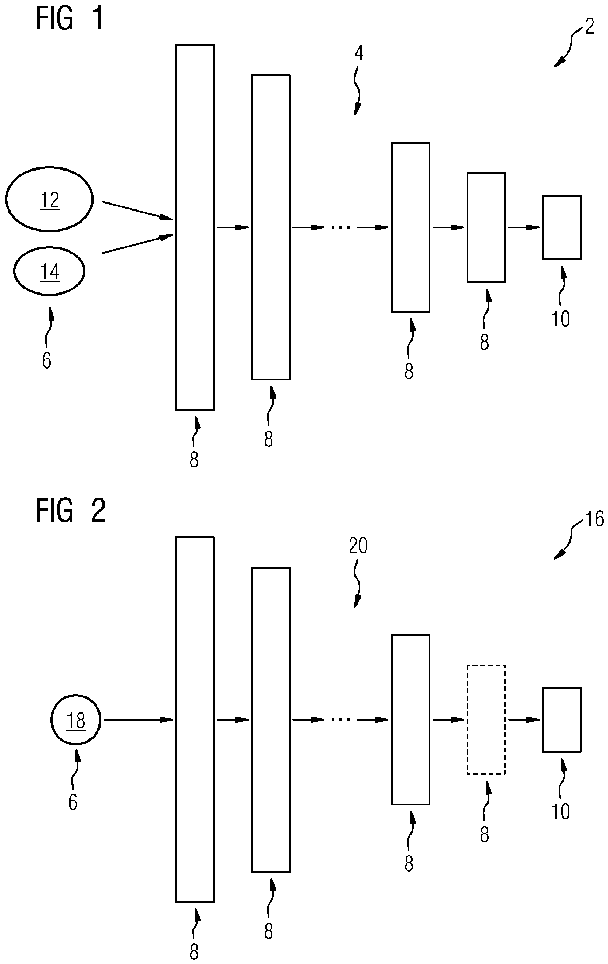

FIG 1 shows a flow chart 2. The flow chart 2 gives a schematic overview of the training of a functional description 4 for a vehicle's component to be observed.

The functional description 4 has an architecture comprising an input layer 6, several hidden layers 8 and an output layer 10.

The functional description 4 is trained by means of a phased Long Short-Term Memory algorithm using continuous data 12 as well as asynchronous data 14. Therefore, continuous data 12 as well as asynchronous data 14 are inputted into the input layer 6. Both types of data 12, 14, that is continuous data 12 as well as asynchronous data 14, describe functional behaviour of reference components of reference vehicles.

Each hidden layer 8 comprises neurons. The neurons build a neuronal network. In the step of training, weights of the neurons are calculated.

In the step of training, representations are determined, which represent features being similar in the behaviour of every reference component. The representations may be represented by means of the first hidden layers 8, which follow up to the input layer 6.

FIG 2 shows a flow chart 16. The flow chart 16 gives a schematic overview of a post-training of the trained functional description 4 after the training shown in FIG 1.

The trained functional description 4 (FIG 1) is post-trained using data 18 describing the functional behaviour of the vehicle's component to be observed by means of Transfer Learning. The data 18 describing the functional behaviour of the vehicle's component to be observed comprise continuous data and/or asynchronous data.

In the step of post-training, the architecture with its layers 6, 8, 10 is kept. Particularly, the number of hidden layers 8 is kept.

Further, in the step of post-training, the last hidden layer 8 - this is the one last hidden layer 8 - is adapted to the data 18 describing the functional behaviour of the vehicle's component to be observed. The (one) last hidden layer 8 is the last layer 8 before the output layer 10.

For adapting the one last hidden layer 8 in the step of post-training, the respective hidden layer 8 is freed and the data 18 describing the functional behaviour of the vehicle's component to be observed are inputted to the input layer 6. Moreover, for adapting the one last hidden layer 8 in the step of post-training, weights of neurons within the respective hidden layer 8 are re-calculated. Therefore, a number of neurons within the one last hidden layer 8 is kept. For the re-calculation, weights of neurons within the respective hidden layer 8 from the trained functional description 4 (FIG 1) may be used as initial weights.

The adapted one last hidden layer 8 is indicated in FIG 2 by a dashed line.

The other hidden layers 8 remain unchanged. In this way, the representations are kept in the step of post-training.

The post-training results in an adapted functional description 20.

By means of the adapted functional description 20, a functional status of the component to be observed can be determined.

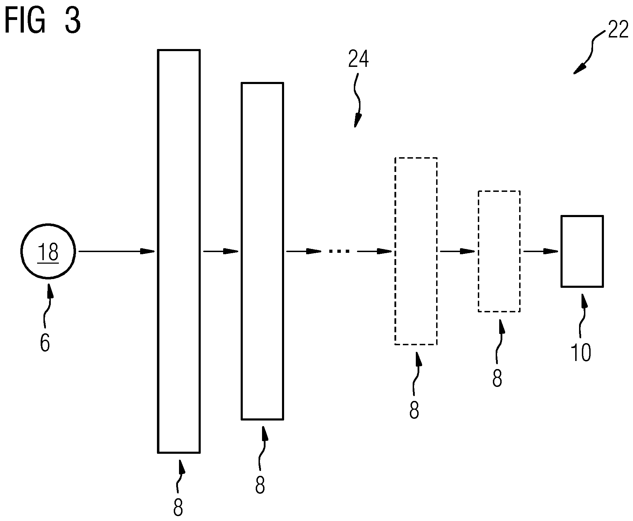

FIG 3 shows a flow chart 22 giving a schematic overview of another post-training of the trained functional description 4 after the training shown in FIG 1.

The following description is restricted essentially to the differences from the embodiment of FIG 2, to which is referred regarding unchanged features and functions.

Essentially identical elements are generally denoted by the same reference numbers and not mentioned features are included in the following embodiment without being described again.

In the step of post-training, several last hidden layers 8 are adapted to the data 18 describing the functional behaviour of the vehicle's component to be observed.

For adapting the several last hidden layers 8 in the step of post-training, the respective hidden layers 8 are freed and the data 18 describing the functional behaviour of the vehicle's component to be observed are inputted to the input layer 6. Moreover, for adapting the several last hidden layers 8 in the step of post-training, weights of neurons within the respective hidden layers 8 are re-calculated. Therefore, a number of neurons within the several last hidden layers 8 are kept. For the re-calculation, weights of neurons within the respective hidden layers 8 from the trained functional description 4 (FIG 1) may be used as initial weights.

The adapted several last hidden layers 8 are indicated in FIG 3 by a dashed line.

The other hidden layers 8 remain unchanged. Particularly, the first hidden layers remain unchanged. In this way, the representations are kept in the step of post-training.

The post-training results in an adapted functional description 24.

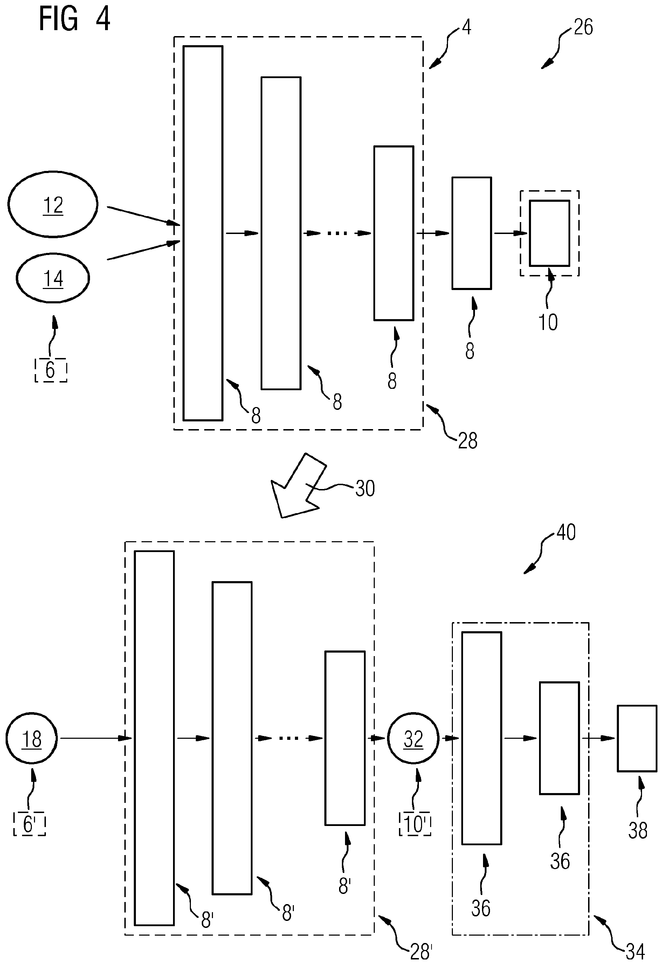

FIG 4 shows a more complex flow chart 26 giving a schematic overview of a different post-training, wherein a main architecture 28 of the trained functional description 4 is transferred (transfer 30).

The trained functional description 4 shown in FIG 1 is illustrated again. The trained functional description 4 has an architecture comprising an input layer 6, several hidden layers 8 and an output layer 10.

Within the transfer 30, the main architecture 28 of the trained functional description 4 is transferred. Therefore, the input layer 6, the first hidden layers 8 and the output layer 10 are transferred. The transferred architecture 28' as well as the transferred layers 6', 8' and 10' are indicated by an apostrophe ' at the corresponding number. Moreover, the neurons within the first hidden layers 8 as well as their weights are transferred. However, in this example the last hidden layer 8 is not transferred.

Data 18 describing the functional behaviour of the vehicle's component to be observed are inputted to the transferred input layer 6'. Representations 32 are outputted to the transferred output layer 10'. Hence, the transferred main architecture 28' acts as generic feature extractor.

Moreover, a shallow model 34 is trained by means of the representations 32. The shallow model 34 comprises hidden layers 36. In FIG 4, two hidden layers 36 of the shallow model 34 are illustrated. However, any other number of hidden layers 36 may be suitable. The shallow model 34 compises an output layer 38.

The transferred architecture 28' and the trained shallow model 34 together result in an adapted functional description 40.

While specific embodiments have been described in detail, those with ordinary skill in the art will appreciate that various modifications and alternatives to those details could be developed in light of the overall teachings of the disclosure. For example, elements described in association with different embodiments may be combined. Accordingly, the particular arrangements disclosed are meant to be illustrative only and should not be construed as limiting the scope of the claims or disclosure, which are to be given the full breadth of the appended claims, and any equivalents thereof.

## Claims

1. Method for adapting a functional description (4) for a vehicle's component to be observed,
comprising the steps of
- training a functional description (4) using continuous data (12) as well as asynchronous data (14) by means of a phased Long Short-Term Memory algorithm, wherein both types of data (12, 14) describe functional behaviour of reference components of reference vehicles, and
- post-training of the trained functional description (4) using data (18) describing the functional behaviour of the vehicle's component to be observed by means of Transfer Learning, wherein the post-training results in the adapted functional description (20, 24, 40).

2. Method according to claim 1,
**characterised in that**
the data (18) describing the functional behaviour of the vehicle's component to be observed comprise continuous data and/or asynchronous data.

3. Method according to claim 1 or 2,
**characterised in that**,
in the step of training, representations (32) are determined, which represent features being similar in the behaviour of every reference component, and,
in the step of post-training, the representations (32) are kept.

4. Method according to any of the preceding claims,
**characterised in that**
the trained functional description (4) has an architecture comprising an input layer (6), several hidden layers (8) and an output layer (10) and,
for the step of post-training, the main architecture (28) of the trained functional description (4) is transferred (30).

5. Method according to any of the preceding claims,
**characterised in that**
the trained functional description (4) has an architecture comprising an input layer (6), several hidden layers (8) and an output layer (10) and,
in the step of post-training, the architecture with its layers (6, 8, 10) is kept and at least one or several last hidden layer(s) (8) is/are adapted to the data (18) describing the functional behaviour of the vehicle's component to be observed.

6. Method according to claim 5,
**characterised in that**,
for adapting at least the one or several last hidden layer(s) (8) in the step of post-training, the respective hidden layer(s) (8) is/are freed and the data (18) describing the functional behaviour of the vehicle's component to be observed are inputted to the input layer (6).

7. Method according to claim 5 or 6,
**characterised in that**
for adapting at least the one or several last hidden layer(s) (8) in the step of post-training, weights of neurons within the respective hidden layer(s) (8) are re-calculated.

8. Method according to any of the claims 5 to 7,
**characterised in that**
in the step of post-training, a number of neurons within each hidden layer (8) is kept.

9. Method according to any of the preceding claims,
**characterised in that**
the vehicle's component to be observed is a railway component.

10. Usage of the method according to any of the preceding claims to determine a functional status of the component to be observed by means of the adapted functional description (20, 24, 40).

11. Computer program with code, which, when executed on a computer, realises the method according to one of the preceding claims.

12. Computer readable medium having a computer program for execution on a computer, which computer program, when executed on a computer, causes the computer to perform the method according to any of the preceding claims.
